# EUROPEAN PATENT APPLICATION

(11) **EP 4 668 038 A1**
(43) Date of publication of application: **24.12.2025**
(21) Application number: 23922847.1
(22) Date of filing: 12.10.2023
(51) Int. Cl.: G05B 19/05

(54) **CONTROL CALCULATION DEVICE AND CONTROL DEVICE**

(30) Priority: 13.02.2023 JP 2023019951
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: HIRANO Tatsuma, Kawasaki-shi, Kanagawa 212-0013 (JP); MATSUYAMA Hiroki, Kawasaki-shi, Kanagawa 212-0013 (JP); OHNISHI Naoya, Kawasaki-shi, Kanagawa 212-0013 (JP)
(74) Representative: AWA Sweden AB
(86) International application number: PCT/JP2023/036958
(87) International publication number: WO 2024/171513

(57) **Abstract**

According to one embodiment, a control computation apparatus includes a first communicating unit that performs cyclic communication along a first path, the cyclic communication being communication on a regular cycle. Furthermore, the control computation apparatus includes a second communicating unit that performs the cyclic communication along a second path. Furthermore, the control computation apparatus includes a communication control unit that transmits a switching notice regarding switching between the first communicating unit and the second communicating unit by controlling the cyclic communication. Furthermore, the control computation apparatus includes a time calculating unit that calculates a timeout period of the cyclic communication. Furthermore, the control computation apparatus includes a control computation unit that performs control computations for controlled equipment based on sensor data received from a control apparatus and transmits results of the control computations for the controlled equipment to the control apparatus. Furthermore, based on the timeout period, the communication control unit transmits the switching notice to switch from the first communicating unit to the second communicating unit or the switching notice to switch from the second communicating unit to the first communicating unit.

## Description

### [Technical Field]

An embodiment of the present invention relates to a control computation apparatus and a control apparatus.

### [Background Art]

Conventionally, a control computation apparatus that uses the cloud to execute control computations traditionally performed by a control apparatus such as a PLC (programmable logic controller) transmits results of control computations to a control apparatus on an edge side via a network. The control apparatus in the field controls instrumentation devices and the like using the received results of control computations.

The control computation apparatus in the cloud conducts communication on a regular cycle (cyclic communication) with the control apparatus in the field via the network and controls the instrumentation devices and the like. When the control computation apparatus in the cloud cannot continue the cyclic communication due to a failure or the like of a router constituting the network, it may become impossible to control the instrumentation devices.

### [Citation List]

### [Patent Literature]

[Patent Literature 1] Japanese patent No. 5183802

### [Summary of Invention]

### [Technical Problem]

The technique described above describes switching of communication from a first network interface to a second network interface. However, the technique described above does not describe how to maintain and switch cyclic communication, and is unsuitable for control communication with instrumentation devices and the like.

Thus, an embodiment of the present invention provides a control computation apparatus and a control apparatus that maintain cyclic communication and switch between communicating units.

### [Solution to Problem]

According to one embodiment, a control computation apparatus includes a first communicating unit that performs cyclic communication along a first path, the cyclic communication being communication on a regular cycle. Furthermore, the control computation apparatus includes a second communicating unit that performs the cyclic communication along a second path. Furthermore, the control computation apparatus includes a communication control unit that transmits a switching notice regarding switching between the first communicating unit and the second communicating unit by controlling the cyclic communication. Furthermore, the control computation apparatus includes a time calculating unit that calculates a timeout period of the cyclic communication. Furthermore, the control computation apparatus includes a control computation unit that performs control computations for controlled equipment based on sensor data received from a control apparatus and transmits results of the control computations for the controlled equipment to the control apparatus. Furthermore, based on the timeout period, the communication control unit transmits the switching notice to switch from the first communicating unit to the second communicating unit or the switching notice to switch from the second communicating unit to the first communicating unit.

### [Brief Description of Drawings]

[Figure 1] Figure 1 is an overall configuration diagram of a control system according to a first embodiment.
[Figure 2] Figure 2 is a connection diagram between a control computation apparatus and control apparatus according to the first embodiment.
[Figure 3] Figure 3 is a message sequence chart at the time when the control computation apparatus and the control apparatus according to the first embodiment switch from a first communicating unit to a second communicating unit.
[Figure 4] Figure 4 shows an example of data transmitted by the first communicating unit and second communicating unit of the control apparatus according to the first embodiment.
[Figure 5] Figure 5 is a flowchart at the time when a communication control unit according to the first embodiment switches from the first communicating unit to the second communicating unit.
[Figure 6] Figure 6 shows an example of a round-trip time database according to the first embodiment.
[Figures 7A to 7C] Figures 7A to 7C are diagrams showing examples of setting timeout periods according to the first embodiment.
[Figure 8] Figure 8 is a hardware configuration diagram of a control computation apparatus and the like according to a second embodiment.

### [Description of Embodiments]

Embodiments of the present disclosure will be described below with reference to the accompanying drawings. The embodiments are not intended to limit the present invention. The drawings are schematic or conceptual, and ratios and the like among parts do not necessarily represent actual ones. In the specification and drawings, components similar to those described earlier with reference to preceding drawings are denoted by the same reference signs as the corresponding components, and detailed description thereof will be omitted as appropriate.

### (First embodiment)

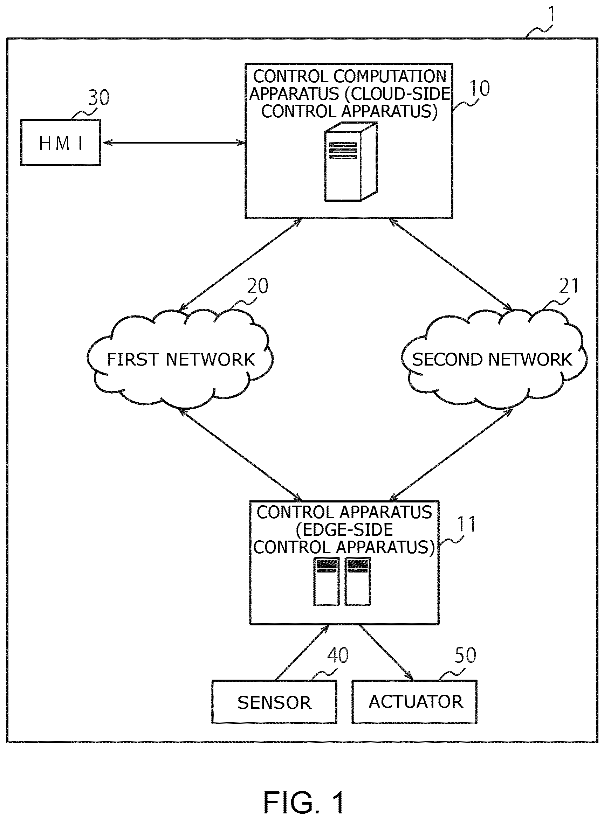

Figure 1 is an overall configuration diagram of a control system according to a first embodiment.

The control system 1 according to the present embodiment includes a control computation apparatus 10 and a control apparatus 11. The control computation apparatus 10 and the control apparatus 11 are connected via a first network 20 and a second network 21. The control apparatus 11 is installed on the edge side on which controlled equipment such as a factory is installed and the control computation apparatus 10 is installed in the cloud away from, for example, a plant.

The control apparatus 11 is connected with a sensor 40 and an actuator 50. The control apparatus 11 collects sensor data such as switch on/off data in addition to temperature, humidity, pressure, or the like from the sensor 40 and transmits the collected data to the control computation apparatus 10 via either of the first network 20 and the second network 21.

Based on the sensor data transmitted from the control apparatus 11, the control computation apparatus 10 performs control computations to control the controlled equipment. The results of the control computations are transmitted to the control apparatus 11 via either of the first network 20 and the second network 21 again. Based on the results of the control computations, the control apparatus 11 generates a control signal and transmits the control signal to the actuator 50.

The actuator 50 operates based on the control signal, and the control signal, which is an electric signal, is converted into physical motion to operate the controlled equipment (not shown).

The control computation apparatus 10 is connected with an HMI (human machine interface) 30. For example, a user creates a control computation program using the HMI 30, and then downloads the program to the control computation apparatus 10 and the control apparatus 11, and so on.

According to the present embodiment, the control computation apparatus 10 is referred to also as a cloud-side control apparatus, and the control apparatus 11 is referred to also as an edge-side control apparatus. The control computation apparatus 10 is connected to an upper side of the control apparatus 11, and thus the side on which the control computation apparatus 10 is installed is referred to as an upper side while the side on which the control apparatus 11 is installed is referred to as a lower side. Now, individual devices will be described below.

Based on the sensor data received from the control apparatus 11, the control computation apparatus 10 performs control computations to control the controlled equipment. The control computation apparatus 10 transmits the results of the control computations to the control apparatus 11. Transmission and reception of data, such as the reception of sensor data and the transmission of control computation results, are carried out via either of the first network 20 and the second network 21. In case one of the networks fails, the control computation apparatus 10 can transmit and receive data by switching to the other network through switching between first and second communicating units 12a and 12b described later, and thereby continue controlling the controlled equipment. The switching of the networks will be described in detail later.

The control apparatus 11 acquires sensor data from the sensor 40 and transmits the sensor data to the control computation apparatus 10. The control apparatus 11 also receives results of control computations produced by the control computation apparatus 10. Based on the results of control computations received from the control computation apparatus 10, the control apparatus 11 generates a control signal. The control apparatus 11 transmits the control signal to the actuator 50 to operate the actuator 50. Transmission and reception of data, including the transmission of sensor data and the reception of control computation results are carried out via either of the first network 20 and the second network 21. In case one of the networks fails, the control apparatus 11 can transmit and receive data by switching to the other network through switching between first and second communicating units 12a' and 12b' described later, and thereby continue controlling the controlled equipment. Block diagrams of the control computation apparatus 10 and network switching operation will be described in detail later.

The first network 20 and the second network 21 are constructed as redundant lines between the control computation apparatus 10 and the control apparatus 11. Each of the networks 20 and 21 is constructed of a wired line such as an optical line or a metal line, or a wireless line such as a 4G (4th generation) line, a 5G (5th generation) line, a multiplexed wireless line, or a satellite line. Description of network equipment such as a router in each network 20 or 21 will be omitted. Each network 20 or 21 may be constructed as a private line or using a public network such as the Internet. One of the networks 20 and 21 may be constructed as a wired line and the other network may be constructed as a wireless line. Besides, a wired line and a wireless line may be mixed in intermediate sections of each network. The first network 20 is an example of a first path and the second network 21 is an example of a second path.

When the control computation apparatus 10 and the control apparatus 11 transmit and receive data using two lines, i.e., the first network 20 and the second network 21, at all times, increases in data volume broadens the bandwidth used, resulting in increased line cost. Thus, the control computation apparatus 10 and the control apparatus 11 conduct communication using only one of the first network 20 or the second network 21.

The HMI 30 displays control status of the controlled equipment via a user interface. An operator can monitor the controlled equipment via the HMI 30. The control computation apparatus 10 and the control apparatus 11 can download a control program from the HMI 30. Although details will be described later, the HMI 30 accepts input of input data to calculate timeout periods from the user.

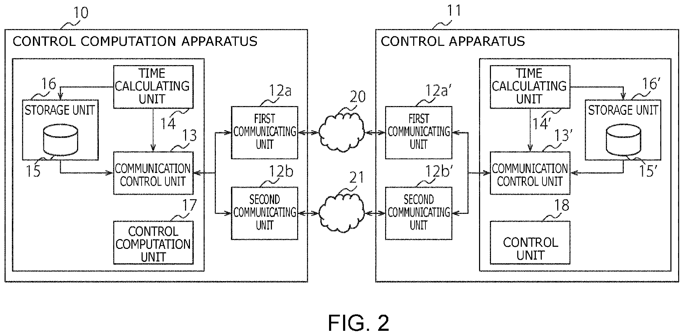

Figure 2 is a connection diagram between the control computation apparatus and the control apparatus according to the first embodiment.

In the following, to distinguish between functional blocks of the control computation apparatus 10 and functional blocks of the control apparatus 11, in the case of the control apparatus 11, the functional block corresponding to the first communicating unit 12a will be denoted by 12a'. Also, the functional blocks corresponding to a second communicating unit 12b, a communication control unit 13, a time calculating unit 14, a round-trip time database 15, and a storage unit 16 will be referred to as a second communicating unit 12b', a communication control unit 13', a time calculating unit 14', a round-trip time database 15', and a storage unit 16', respectively. Functional blocks of only the control computation apparatus 10 will be described because corresponding functional blocks are similar in function between the two apparatus.

The first communicating unit 12a of the control computation apparatus 10 and the first communicating unit 12a' of the control apparatus 11 are interconnected via the first network 20. Similarly, the second communicating units 12b and 12b' are interconnected via the second network 21.

The control computation apparatus 10 includes the communication control unit 13, the time calculating unit 14, the storage unit 16, and a control computation unit 17. The control computation apparatus 10 can be implemented by installing a program for the control computation apparatus 10, for example, on a PC (personal computer). As a CPU (central processing unit) in the control computation apparatus 10 executes the program of the control computation apparatus 10, functions of the communication control unit 13, time calculating unit 14, storage unit 16, and control computation unit 17 are implemented. The storage unit 16 includes the round-trip time database 15, which is an area to store timeout periods and the like, and is built, for example, in an auxiliary memory on an HDD (hard disc drive). Alternatively, the control computation apparatus 10 may be installed as a VM (virtual machine) on the PC.

The control computation apparatus 10 also includes the first communicating unit 12a and the second communicating unit 12b. Each of the communicating units 12a and 12b is, for example, a network interface. The communicating units 12a and 12b may be implemented as two physical ports or as two virtual ports both provided on a single physical port.

In the following example, it is assumed that the first communicating unit 12a and the second communicating unit 12b include respective physical ports.

Based on the timeout periods described later, the communication control unit 13 determines whether cyclic communication is being conducted smoothly and decides which of the first communicating unit 12a and the second communicating unit 12b is to be used.

Based on input data inputted in the HMI 30, the time calculating unit 14 calculates the timeout period. Details of the time calculating unit 14 will be described later.

The round-trip time database 15 holds input data and timeout periods. For example, the round-trip time database 15 holds timeout periods classified by time of day and day of week.

Based on the sensor data and the like received from the control apparatus 11 via the first communicating unit 12a or the second communicating unit 12b, the control computation unit 17 performs control computations to operate the controlled equipment. The control computations are computations used to control the controlled equipment. For example, the control computation unit 17 receives the sensor data on the sensor 40 from the control apparatus 11 via the first communicating unit 12a or the second communicating unit 12b. The control computation unit 17 also computes output value for the actuator 50 based on the received sensor data, to operate the controlled equipment. The results of the control computations are transmitted to the control apparatus 11 via the first communicating unit 12a or the second communicating unit 12b.

The control apparatus 11 includes the communication control unit 13', the time calculating unit 14', the storage unit 16', and a control unit 18. The control apparatus 11 can be implemented by installing a program for the control apparatus 11, for example, on a PC (personal computer). As a CPU (central processing unit) in the control apparatus 11 executes a program of control apparatus 11, functions of the communication control unit 13', time calculating unit 14', storage unit 16', and control unit 18 are implemented. The storage unit 16' includes the round-trip time database 15', which is an area to store timeout periods and the like, and is built, for example, in an auxiliary memory on an HDD (hard disc drive). The control apparatus 11 may be installed as a PLC.

The control unit 18 transmits the sensor data to the control computation apparatus 10 via the first communicating unit 12a' or the second communicating unit 12b'. The control unit 18 also receives results of control computations from the control computation apparatus 10 via the first communicating unit 12a' or the second communicating unit 12b'. Based on the results of control computations, the control unit 18 generates a control signal used in controlling the actuator 50 and transmits the control signal to the actuator 50. The actuator 50 operates based on the control signal, thereby causing the controlled equipment to operate.

Hereinafter, an operation in which the communication control unit 13 or 13' transmits cyclic communication data on a regular cycle via the first communicating unit 12a or the second communicating unit 12b will be referred to as cyclic communication. The interval between the time at which cyclic communication is started and the time at which the next cyclic communication is started will be referred to as a cyclic communication interval. A method for switching between networks while maintaining cyclic communication will be described below. To simplify the explanation of switching operation, description of transmission and reception of sensor data and transmission and reception of control computation results will be omitted.

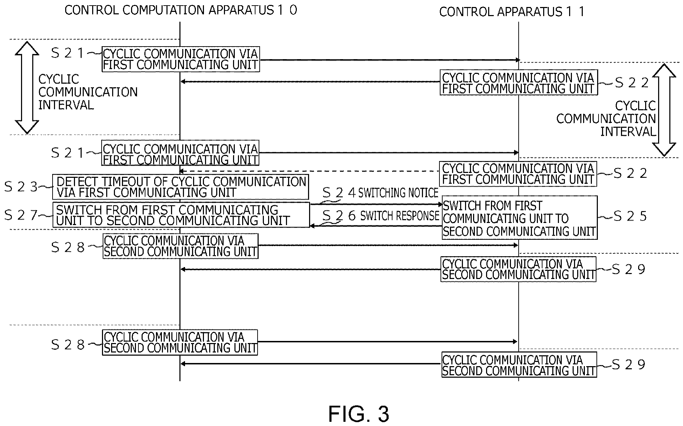

Figure 3 is a message sequence chart at the time when the control computation apparatus and the control apparatus according to the first embodiment switch from the first communicating unit to the second communicating unit.

In Figure 3, description will be given of a concrete flow whereby the control computation apparatus 10 switches between the communicating units while maintaining cyclic communication.

In step S21, the communication control unit 13 of the control computation apparatus 10 transmits cyclic communication data to the first communicating unit 12a' via the first communicating unit 12a. In step S22, the communication control unit 13' of the control apparatus 11 transmits cyclic communication data to the first communicating unit 12a via the first communicating unit 12a'.

Transmission timings of the cyclic communication data may be set by the communication control units 13 and 13' using a timer or set by cyclic communication management units (not shown) using a timer when the cyclic communication management units are provided as functional blocks on the control computation apparatus 10 and the control apparatus 11. The transmission timings of the cyclic communication data may be set by other means.

While transmission and reception of cyclic communication data are being conducted normally, the operations of steps S21 and S22 are repeated. According to the present embodiment, the interval between the time when the communication control unit 13 starts transmitting cyclic communication data from the first communicating unit 12a and the time when the cyclic communication data transmitted by the communication control unit 13' is received by the first communicating unit 12a is referred to as a round-trip time of cyclic communication. Alternatively, the round-trip time of cyclic communication may be expressed as the interval between the time when the communication control unit 13 starts transmitting cyclic communication data from the second communicating unit 12b and the time when the cyclic communication data transmitted by the communication control unit 13' is received by the second communicating unit 12b. Besides, any processing time required by the communication control units 13 and 13', for example, in transmitting the cyclic communication data may be included in the round-trip time of cyclic communication.

The first network 20 and the second network 21 conduct communication using different communication media, and thus when the control computation apparatus 10 transmits cyclic communication data through respective paths, delay times may differ between the two. In the following description, according to the present embodiment, the round-trip time of cyclic communication is calculated assuming cyclic communication via the first network 20.

When the first communicating unit 12a is unable to receive cyclic communication data from the communication control unit 13' within the timeout period in step S22, the communication control unit 13 detects a timeout in step S23 and determines that there is something wrong with the communication by the first communicating unit 12a. In step S24, the communication control unit 13 transmits a switching notice from the second communicating unit 12b to the second communicating unit 12b' of the control apparatus 11 to switch communication from the first communicating unit 12a to the second communicating unit 12b.

Note that although omitted in the flowchart, a step may be included before transmission of a switching notice to allow the communication control unit 13 to check whether the second communicating unit 12b has received a switching notice from the control apparatus 11.

Besides, when the communication control unit 13 transmits a switching notice in step S24, the second communicating unit 12b and the second communicating unit 12b' may conduct negotiations to make each other ready for communication. Alternatively, negotiations may be conducted beforehand such as before the control system 1 enters service.

In step S25, when the second communicating unit 12b' receives a switching notice, the communication control unit 13' performs the process of switching subsequent cyclic communication from the first communicating unit 12a' to the second communicating unit 12b'. After performing a switching process in step S25, the communication control unit 13' transmits a switch response to the second communicating unit 12b in step S26.

In step S27, when the second communicating unit 12b receives the switch response, the communication control unit 13 performs the process of switching subsequent cyclic communication from the first communicating unit 12a to the second communicating unit 12b. In step S28, the communication control unit 13 of the control computation apparatus 10 transmits cyclic communication data to the second communicating unit 12b' via the second communicating unit 12b.

In step S29, regarding the communication control unit 13', the communication control unit 13' transmits cyclic communication data to the second communicating unit 12b via the second communicating unit 12b'.

In the subsequent cyclic communication, the operations of steps S28 and S29 are repeated.

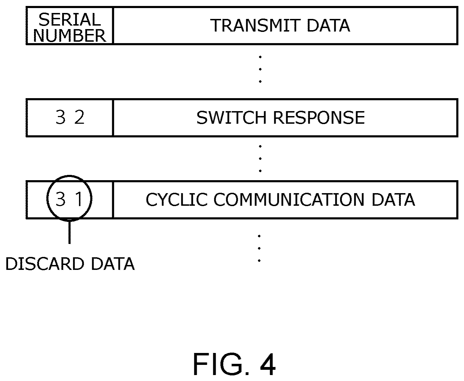

Figure 4 shows an example of data transmitted by the first communicating unit and second communicating unit of the control apparatus according to the first embodiment.

The data transmitted by the control computation apparatus 10 and the control apparatus 11 in cyclic communication are similar in content, and thus an example in which data transmitted by the control apparatus 11 is received by the control computation apparatus 10 will be described in Figure 4.

In the above-mentioned cyclic communication, for example, the first communicating unit 12a described above could receive cyclic communication data by lagging behind the first communicating unit 12a' after detecting a timeout. Now, description will be given of a method for continuing a switching process unmistakably even when data is received with a delay in this way.

As shown in Figure 4, the data transmitted from the communication control units 13 and 13' are assigned serial numbers. The serial numbers are assigned separately by the communication control units 13 and 13', and are designed to increase each time data is transmitted by the communication control unit 13 or 13'. The serial numbers are transmitted together with another item of transmit data such as cyclic communication data or a switching notice. It is not strictly necessarily that the serial numbers begin with a number such as 0 or 1, and it is sufficient that the serial numbers are assigned such that the transmission order of transmit data can be distinguished among cyclic signals.

The serial numbers transmitted from the communication control unit 13 or 13' are managed at the receiving end. The communication control unit 13' or 13 at the receiving end checks the serial number assigned to the received data, and adopts the transmit data when the serial number has increased from the serial number assigned to the transmit data received the last time. When the serial number is an old number or the same number, the data is discarded.

Figure 4 shows an example in which the second communicating unit 12b receives cyclic communication data after receiving a switch response in step S26. That is, in the example, in response to detection of a cyclic communication timeout, the communication control unit 13 performs a switching process of switching from the first communicating unit 12a to the second communicating unit 12b and subsequently cyclic communication data is received by the second communicating unit 12b with a delay.

In this example, the communication control unit 13' assigns a serial number of "31" to cyclic communication data, which is the first transmit data, and assigns a serial number of "32" to a switch response, which is the next transmit data. The second communicating unit 12b at the receiving end first receives the switch response with the serial number of "32," and subsequently receives the cyclic communication data with the serial number of "31" with a delay. In this case, since the cyclic communication data arriving later and having the serial number of "31" has a smaller serial number than does the switch response received earlier and having the serial number of "32", the cyclic communication data is discarded by the communication control unit 13.

By discarding the cyclic communication data, the communication control unit 13 performs a switching process of switching from the first communicating unit 12a to the second communicating unit 12b according to a correct message sequence chart in step S27.

In this way, when increasing serial numbers are assigned to individual items of data transmitted by the communication control unit 13' and the communication control unit 13 at the receiving end determines replacement of serial numbers, the control computation apparatus 10 and the control apparatus 11 can unmistakably continue communication.

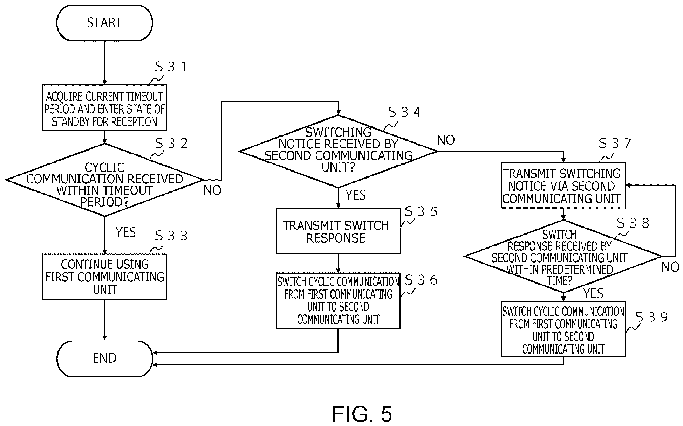

Figure 5 is a flowchart at the time when the communication control unit according to the first embodiment switches from the first communicating unit to the second communicating unit.

The switching between communicating units is done by the control computation apparatus 10 and the control apparatus 11 by following a similar flow, and thus in Figure 5, description will be given by taking as an example a case in which the communication control unit 13 switches from the first communicating unit 12a to the second communicating unit 12b.

With the present flowchart, description will be given by assuming that the control computation apparatus 10 and the control apparatus 11 are conducting cyclic communication using the first communicating units 12a and 12a', respectively.

In step S31, the communication control unit 13 reads the current timeout period from the round-trip time database 15 and enters a state of standby for reception of cyclic communication data. According to the present embodiment, the communication control unit 13 reads the timeout period from the round-trip time database 15 each time cyclic communication is conducted, but instead, the control computation apparatus 10 may be configured to access cache memory to speed up processing. For example, it is conceivable that by storing timeout periods corresponding to individual time points in cache memory, the communication control unit 13 is configured to access cache memory each time cyclic communication is conducted and read the timeout period corresponding to the given time point. The timeout periods can conceivably be stored in cache memory, for example, on start-up, or during operation, of the control computation apparatus 10. In step S32, the communication control unit 13 determines whether the cyclic communication data transmitted from the communication control unit 13' is to be received through the first communicating unit 12a within the timeout period.

When it is found in step S32 that cyclic communication data has been received within the timeout period, the communication control unit 13 determines in step S33 that the first communicating units 12a and 12a' and the first network 20 are sound and continues using the first communicating unit 12a. When it is found in step S32 that cyclic communication data has not been received within the timeout period, the communication control unit 13 determines in step S34 that a failure has occurred in any of the first communicating units 12a and 12a' and first network 20. The communication control unit 13 determines whether the second communicating unit 12b, rather than the first communicating units 12a used for cyclic communication, has received a switching notice transmitted from the control apparatus 11.

When it is found in step S34 that the second communicating unit 12b has received a switching notice transmitted from the control apparatus 11, the communication control unit 13 transmits a switch response to the second communicating unit 12b' via the second communicating unit 12b in step S35. In step S36, the communication control unit 13 performs the process of switching cyclic communication from the first communicating unit 12a to the second communicating unit 12b.

When it is found in step S34 that the second communicating unit 12b has not received a switching notice transmitted from the control apparatus 11, the communication control unit 13 transmits a switching notice to the second communicating unit 12b' via the second communicating unit 12b in step S37. In step S38, the communication control unit 13 determines whether a switch response transmitted from the control apparatus 11 is to be received by the second communicating unit 12b within the timeout period.

When it is found in step S38 that the second communicating unit 12b has received a switch response transmitted from the control apparatus 11, the communication control unit 13 performs the process of switching cyclic communication from the first communicating unit 12a to the second communicating unit 12b in step S39. When it is found in step S38 that the second communicating unit 12b has not received a switch response transmitted from the control apparatus 11, the communication control unit 13 returns to step S37 and retransmits a switching notice to the second communicating unit 12b' via the second communicating unit 12b. Although not illustrated in the flowchart of Figure 5, an upper limit may be set on the number of retransmissions. When the number of retransmissions reaches the upper limit, the communication control unit 13 may try cyclic communication again using the first communicating unit 12a. Alternatively, when the number of retransmissions reaches the upper limit, the communication control unit 13 may start the flowchart again by returning to step S31. Regarding the method of retransmission, an existing communication method that has a retransmission function such as TCP (transmission control protocol) may be used.

When it is found in step S38 that the second communicating unit 12b has not received a switch response transmitted from the control apparatus 11, the communication control unit 13 may start the flowchart again by returning to step S31 rather than retransmitting the switching notice. The communication control unit 13 may ensure reliable delivery of the switching notice by transmitting cyclic communication data and various notices successively from the beginning.

According to the present flowchart, the switching process finishes after steps S33, S36, and S39, and when a next timing for cyclic communication occurs, the communication control unit 13 starts processing by beginning with step S31 again. In so doing, the flowchart is applied by interchanging the first communicating unit 12a with the second communicating unit 12b. After the switching is completed, transmission and reception of data, including the reception of sensor data and the transmission of control computation results can be conducted as usual.

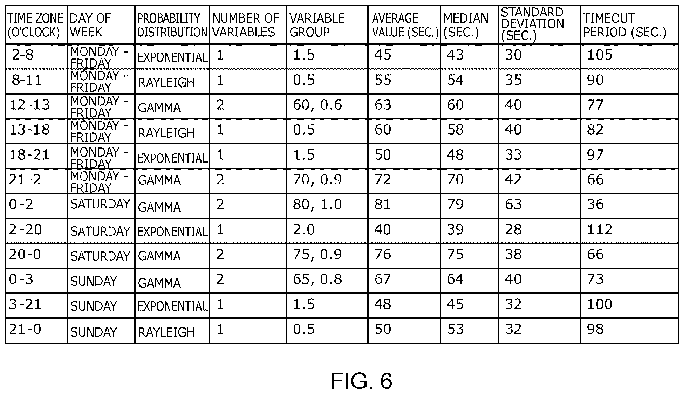

Figure 6 shows an example of the round-trip time database according to the first embodiment.

In Figure 6, the round-trip time database 15 of the control computation apparatus 10 will be described. The round-trip time database 15' of the control apparatus 11 is similar to the round-trip time database 15, and thus description thereof will be omitted.

The types of probability distribution expressed by the round-trip time of cyclic communication; variables substituted into the probability distribution as parameters; the average value, median, and standard deviation of round-trip times; timeout periods, and the like are stored in the round-trip time database 15 by being classified by day of week and time of day.

According to the present embodiment, day of week, time of day, probability distribution, the number of variables, variable group, average value, median, standard deviation, and timeout value are stored. Item "time zone" may be stored in units of minutes or seconds or in smaller units. Item "day of week" may be stored, for example, in units of days or months.

According to the present embodiment, in storing the above data in the round-trip time database 15, the HMI 30 accepts input from the user via an input interface (not shown). In this example, the HMI 30 accepts time of day, day of week, type of probability distribution, the number of variables, variable group, average value, median, and standard deviation as input data. The HMI 30 may also accept uploads of configuration files regarding input data such as CSV files via the input interface. Alternatively, input data may be flowed into a maintenance PC connected directly to the control computation apparatus 10 rather than being inputted to the HMI 30.

The time calculating unit 14 calculates timeout periods based on input data. The time calculating unit 14 stores the input data and the timeout periods in the round-trip time database 15 by correlating them to each other.

The data stored in the round-trip time database 15 are not limited to those described above. For example, the data stored in the round-trip time database 15 may include the maximum value, minimum value, mode value, degree of distortion, or the like of round-trip times. Besides, any of the data described above do not have to be included in the round-trip time database 15.

Generally, public networks such as the Internet change in the degree of congestion with day of week or time of day, and, for example, on weekdays, congestion occurs more often in the night than in the daytime. In case of communication congestion, the round-trip time of cyclic communication will be delayed.

For the reasons described above, with the ordinate representing probability and the abscissa representing time, when the round-trip time of cyclic communication is expressed as a probability distribution, the resulting distribution may be close to, for example, a Rayleigh distribution, a gamma distribution, an exponential distribution, or the like rather than a normal distribution.

According to the present embodiment, when entering input to the HMI 30, the user classifies the types of probability distribution expressed by the round-trip time of cyclic communication according to the day of the week and time zone beforehand. The time calculating unit 14 calculates the timeout period for each day of the week and time zone from the average value, the median, or the standard deviation expressed by the type of probability distribution and stores the results in the round-trip time database 15.

Figure 6 shows an example in which the types of probability distribution are classified into three: exponential distribution, Rayleigh distribution, and gamma distribution. The number of variables and variable group in Figure 6 represent the number of variables substituted into the expressions of probability distributions as parameters as well as values of the variables. The types of probability distribution are not limited to those described above, and other types of distribution such as normal distribution and Pareto distribution may be used for classification as well.

The average value, the median, and the standard deviation in Figure 6 are the average value, median, and standard deviation of the round-trip times of cyclic communication, which are obtained when the values of variables serving as parameters are substituted into the expressions of probability distributions. The timeout period in Figure 6 is the timeout period calculated by the time calculating unit 14.

The types of probability distribution are classified by the user beforehand, for example, based on a probability distribution of the round-trip times of cyclic communication and inputted to the input interface of the HMI 30, but may be classified automatically using a supervised machine learning model. For example, plot data about the probability distribution of the communication round-trip times related to another control system and the type of probability distribution represented by the distribution are caused to be learned by the time calculating unit 14 as teacher data. The time calculating unit 14 may be trained to output the type of probability distribution as output when the HMI 30 accepts, as input, plot data about the probability distribution of the round-trip times related to the control system 1 according to the present embodiment from the user. In addition to outputting the type of probability distribution, the time calculating unit 14 may also be trained to output, for example, the number of variables and variable group. Based on these values, the time calculating unit 14 may calculate and output the average value, median, or standard deviation of the communication round-trip times.

Desirably, the round-trip time database 15 is created, for example, before the control system 1 enters service. For example, by providing a temporary operation period or the like before the control system 1 enters service, round-trip times of cyclic communication may be collected by the control system 1. Because the communication control unit 13 conducts cyclic communication at all times, the time calculating unit 14 may be configured to update and store the timeout period in the round-trip time database 15 based on the round-trip times of cyclic communication measured by the communication control unit 13, after the control system 1 enters service. To update the timeout period, by providing an update button, for example, on the input interface of the HMI 30, the time calculating unit 14 may calculate the timeout period when the user presses the update button. Alternatively, the timeout period may be undated with predetermined timing.

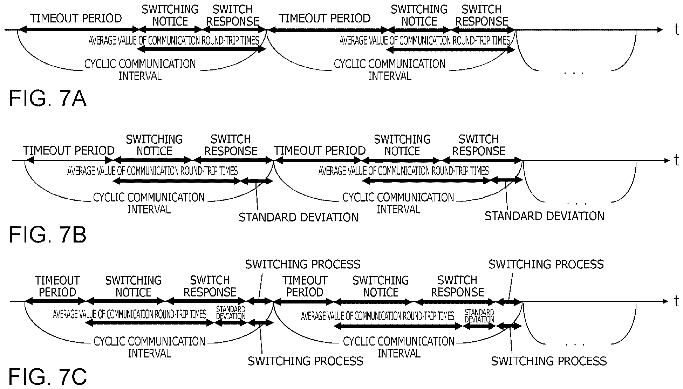

Figures 7A to 7C are diagrams showing examples of setting timeout periods are set according to the first embodiment.

In Figures 7A to 7C, the abscissa t represents elapsed time, and the items along the abscissa indicate operation details of the control computation apparatus 10 in the respective time zones.

Because the control computation apparatus 10 and the control apparatus 11 use similar calculation methods to set timeout periods, only a timeout period setting method used by the control computation apparatus 10 will be described in Figures 7A to 7C.

For example, in switching communication from the first communicating unit 12a to the second communicating unit 12b, to maintain the time cycle of the cyclic communication, the communication control unit 13 completes the switching process before transmission of cyclic communication data for the next cyclic communication. In the switching process, the communication control unit 13 needs to transmit a switching notice from the second communicating unit 12b and subsequently receive a switch response from the communication control unit 13' via the second communicating unit 12b, and thus time nearly equal to the round-trip time of cyclic communication is required. Some examples of the timeout period calculated by the time calculating unit 14 will be described below.

Figure 7A shows an example of how timeout periods are set according to the first embodiment.

According to the present embodiment, the time calculating unit 14 calculates the timeout period by subtracting the average time of the round-trip times of cyclic communication from the cyclic communication interval.

Figure 7B shows another example of how timeout periods are set according to the first embodiment.

Because the round-trip times of cyclic communication will fluctuate with the time of the day and the day of the week for reasons of congestion and the like, when only the average time of the round-trip times of cyclic communication is used, the communication control unit 13 sometimes may not be able to maintain the cyclic communication interval. Therefore, in calculating the timeout period, the time calculating unit 14 may further subtract the standard deviation in addition to the average time. In this case, the timeout period is calculated by subtracting the average time and standard deviation of the round-trip times of cyclic communication from the cyclic communication interval.

Figure 7C shows still another example of how timeout periods are set according to the first embodiment.

In calculating the timeout period, the time calculating unit 14 may further subtract switching processing period from the value in Figure 7B described above, where the switching processing period is the time taken to switch communication from the first communicating unit 12a to the second communicating unit 12b. In this case, the timeout period is calculated by subtracting the switching processing period as well as the average time and standard deviation of the round-trip times of cyclic communication from the cyclic communication interval.

As the timeout period, the median of the round-trip times of cyclic communication may be used instead of the average time. In this case, the timeout period is obtained by subtracting the median of the round-trip times of cyclic communication from the cyclic communication interval. Similarly, in calculating the timeout period, the time calculating unit 14 may further subtract the standard deviation from the result of the preceding subtraction. Similarly, the time calculating unit 14 may further subtract the switching processing period from the result of the preceding subtraction.

Furthermore, in calculating the timeout period, a margin may be provided. Regarding the margin, it is conceivable to measure a processing time other than the switching processing period in advance. Besides, the maximum value, minimum value, mode value, degree of distortion, or the like of the round-trip times of cyclic communication may be used.

Besides, in calculating the timeout period, cumulative probability may be used. For example, the time calculating unit 14 may calculate such a round-trip time that the cumulative probability of the round-trip times of cyclic communication falls within three sigmas or six sigmas and subtract the value of the round-trip time from the cyclic communication interval. For example, when the standard deviation is sigma, the round-trip time that falls within three sigmas equals the average value of the round-trip times of cyclic communication plus three times the standard deviation. On the other hand, the round-trip time that falls within six sigmas equals the average value of the round-trip times of cyclic communication plus six times the standard deviation.

According to the first embodiment, even when the control computation apparatus 10 and the control apparatus 11 are unable to communicate due to a failure of the first network 20, the second network 21, or the like, the first communicating unit 12a and the second communicating unit 12b are switched based on the timeout period. Consequently, the control computation apparatus 10 and the control apparatus 11 can continue communication without interrupting cyclic communication.

According to the present embodiment, even when a failure occurs in the first network 20, the second network 21, or the like, communication can be continued, allowing the control computation apparatus 10 to continue transmitting control computations, and the controlled equipment to continue operation.

According to the present embodiment, the communication control units 13 and 13' switch between the first communicating unit 12a or 12a' and the second communicating unit 12b or 12b' based on transmission/reception status of a switching notice and switch response. This allows the communication control units 13 and 13' to eliminate the need for any operation of specifically pinpointing a failure location and switch between networks quickly. Specifically, the communication control units 13 and 13' can switch between networks quickly without the need for any operation of pinpointing where the failure has occurred among the first communicating unit 12a or 12a', the first network 20, the second network 21, and the second communicating unit 12b or 12b'.

According to the present embodiment, the time calculating unit 14 calculates the timeout period by subtracting the average value and/or median of the round-trip times of cyclic communication from the cyclic communication interval. Consequently, the communication control units 13 and 13' can maintain the cyclic communication interval even in case of a failure and switch between the first communicating unit 12a or 12a' and the second communicating unit 12b or 12b'.

According to the present embodiment, in calculating the timeout period, the time calculating unit 14 may subtract the standard deviation of the round-trip time. This will allow the control computation apparatus 10 to maintain the cyclic communication interval even when there is variation in the round-trip time, and switch between the first communicating unit 12a or 12a' and the second communicating unit 12b or 12b'.

According to the present embodiment, in calculating the timeout period, the time calculating unit 14 may subtract the switching processing period. This will allow the control computation apparatus 10 to maintain the cyclic communication interval even when a long switching processing period is required and switch between the first communicating unit 12a or 12a' and the second communicating unit 12b or 12b'.

According to the present embodiment, in calculating the timeout period, the time calculating unit 14 may use time zones in which the cumulative probability of round-trip times falls within three sigmas or six sigmas. This will allow the control computation apparatus 10 to maintain the cyclic communication interval more reliably.

According to the present embodiment, the time calculating unit 14 calculates the timeout period for each day of the week and time zone. This allows the communication control unit 13 to change the timeout period flexibly according to the congestion situation of communication.

### (Second embodiment)

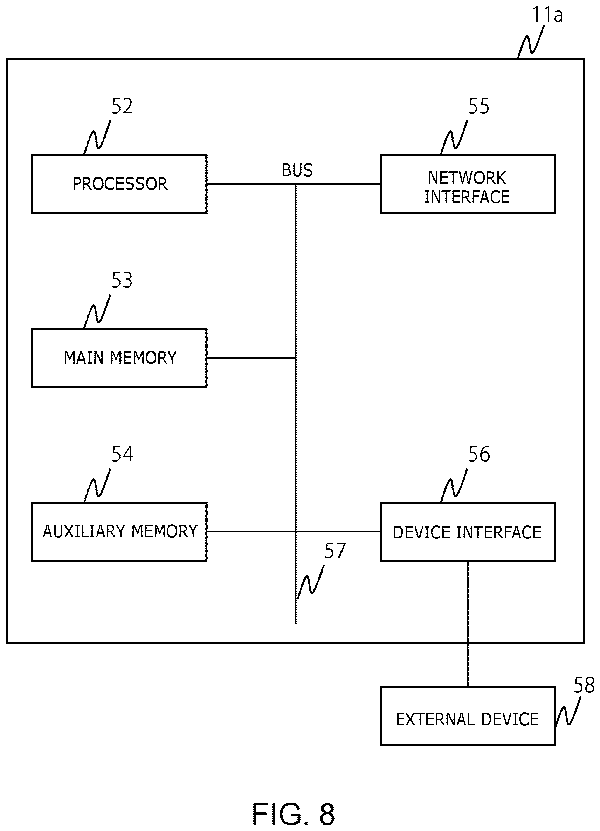

Figure 8 is a hardware configuration diagram of a control computation apparatus and the like according to a second embodiment.

A control computation apparatus 10 in Figure 8 includes a processor 52 such as a CPU, a main memory 53 such as a RAM, an auxiliary memory 54 such as an HDD, a network interface 55 such as a LAN (local area network) board, a device interface 56 such as a memory slot or a memory port, and a bus 57 used to interconnect these devices. The control computation apparatus 10 is, for example, a computer such as a PC (personal computer), which includes input devices such as a keyboard or a mouse and output devices such as an LCD (liquid crystal display) monitor.

In the present embodiment, a program for use to make a computer perform information processing for the control computation apparatus 10 has been installed in the auxiliary memory 54. The control computation apparatus 10 loads the program into the main memory 53 and makes the processor 52 execute the program. Consequently, the functions of the blocks 13 to 16 shown in Figure 2 are implemented in the control computation apparatus 10, enabling calculations of timeout periods and the like described in the first embodiment. Note that the data generated by information processing is either temporarily held in the main memory 53 or saved and stored in the auxiliary memory 54. According to the present embodiment, two physical ports are placed on a single LAN board to function as the first communicating unit 12a and the second communicating unit 12b, respectively.

The program can be installed, for example, by mounting an external device 58 with the program recorded therein on the device interface 56 and storing the program in the auxiliary memory 54 from the external device 58. Examples of the external device 58 include a computer-readable recording medium and a recording device containing such a recording medium. Examples of the recording medium include a CD-ROM (Compact Disk Read Only Memory), a CD-R (Compact Disk Recordable), a flexible disk, a DVD-ROM (Digital Versatile Disk Read Only Memory), and a DVD-R (Digital Versatile Disk Recordable); and examples of the recording device include an HDD. The program can be installed, for example, by being downloaded via the network interface 55.

According to the present embodiment, the functions of the control computation apparatus 10 according to the first embodiment can be implemented by software.

Whereas a few embodiments of the present invention have been described above, these embodiments are presented only by way of example, and not intended to limit the scope of the invention. The novel control computation apparatus 10 and control apparatus 11 described herein can be implemented in various other forms. Besides, various omissions, replacements, and changes can be made with respect to the control computation apparatus 10 and control apparatus 11 described herein without departing from the gist of the invention. The appended claims and the scope of equivalents thereof are intended to include such forms and modifications included in the scope and gist of the invention.

### [Reference Signs List]

1: control system; 10: control computation apparatus; 11: control apparatus; 12a: first communicating unit; 12a': first communicating unit; 12b: second communicating unit; 12b': second communicating unit; 13: communication control unit; 13': communication control unit; 14: time calculating unit; 14': time calculating unit; 15: round-trip time database; 15': round-trip time database; 16: storage unit; 17: control computation unit; 18: control unit; 20: first network; 21: second network; 30: HMI; 40: sensor; 50: actuator; 52: processor; 53: main memory; 54: auxiliary memory; 55: network interface; 56: device interface; 57: bus; 58: external device

## Claims

1. A control computation apparatus comprising:
a first communicating unit that performs cyclic communication along a first path, the cyclic communication being communication on a regular cycle;
a second communicating unit that performs the cyclic communication along a second path;
a communication control unit that transmits a switching notice regarding switching between the first communicating unit and the second communicating unit by controlling the cyclic communication;
a time calculating unit that calculates a timeout period of the cyclic communication; and
a control computation unit that performs control computations for controlled equipment based on sensor data received from a control apparatus and transmits results of the control computations for the controlled equipment to the control apparatus, wherein
based on the timeout period,
the communication control unit
transmits the switching notice to switch from the first communicating unit to the second communicating unit, or the switching notice to switch from the second communicating unit to the first communicating unit.

2. The control computation apparatus according to claim 1, wherein
when cyclic communication data transmitted through the cyclic communication is not received by the first communicating unit within the timeout period, the communication control unit transmits the switching notice using the second communicating unit and switches to the second communicating unit after receiving a switch response, the switch response being a response to the switching notice, or
when the cyclic communication data is not received by the second communicating unit within the timeout period, the communication control unit transmits the switching notice using the first communicating unit and switches to the first communicating unit after receiving the switch response.

3. The control computation apparatus according to claim 1, wherein
the time calculating unit
calculates the timeout period based on an interval of the cyclic communication and on a round-trip time of the cyclic communication.

4. The control computation apparatus according to claim 3, wherein the time calculating unit
calculates the timeout period by subtracting an average value or a median of round-trip times of the cyclic communication from the interval of the cyclic communication, or
calculates the timeout period corresponding to day of week and time of day based on the type of probability distribution expressed by the round-trip time of the cyclic communication.

5. The control computation apparatus according to claim 4, wherein the time calculating unit
calculates the timeout period by further subtracting a standard deviation of the round-trip times of the cyclic communication from the interval of the cyclic communication, or
calculates the timeout period by further subtracting a switching processing period required to switch between the first and second communicating units from the interval of the cyclic communication.

6. The control computation apparatus according to claim 4, wherein the time calculating unit
calculates the timeout period by subtracting such time that cumulative probability of probability distribution expressed by the round-trip time of the cyclic communication falls within three sigmas or six sigmas from the interval of the cyclic communication.

7. The control computation apparatus according to claim 4, further comprising a storage unit that stores the timeout period corresponding to day of week and time of day, wherein
the communication control unit reads, from the storage unit, the timeout period corresponding to day of week and time of day when the cyclic communication is conducted.

8. The control computation apparatus according to claim 1, wherein the time calculating unit updates the timeout period based on a round-trip time of the cyclic communication measured by the communication control unit.

9. A control apparatus comprising:
a first communicating unit that performs cyclic communication along a first path, the cyclic communication being communication on a regular cycle;
a second communicating unit that performs the cyclic communication along a second path;
a communication control unit that transmits a switching notice regarding switching between the first communicating unit and the second communicating unit by controlling the cyclic communication;
a time calculating unit that calculates a timeout period of the cyclic communication; and
a control unit that generates a control signal for controlled equipment based on results of control computations for the controlled equipment, the results of control computations being received from a control computation apparatus, wherein
based on the timeout period,
the communication control unit
transmits the switching notice to switch from the first communicating unit to the second communicating unit, or
transmits the switching notice to switch from the second communicating unit to the first communicating unit.

10. The control apparatus according to claim 9, wherein
when cyclic communication data transmitted through the cyclic communication is not received by the first communicating unit within the timeout period, the communication control unit transmits the switching notice using the second communicating unit and switches to the second communicating unit after receiving a switch response, the switch response being a response to the switching notice, or
when the cyclic communication data is not received by the second communicating unit within the timeout period, the communication control unit transmits the switching notice using the first communicating unit and switches to the first communicating unit after receiving the switch response.

11. The control apparatus according to claim 9, wherein the time calculating unit
calculates the timeout period based on an interval of the cyclic communication and on a round-trip time of the cyclic communication.

12. The control apparatus according to claim 11, wherein the time calculating unit
calculates the timeout period by subtracting an average value or a median of round-trip times of the cyclic communication from the interval of the cyclic communication, or
calculates the timeout period corresponding to day of week and time of day based on the type of probability distribution expressed by the round-trip time of the cyclic communication.
